# EUROPÄISCHE PATENTANMELDUNG

(11) **EP 2 374 640 A1**
(43) Veröffentlichungstag der Anmeldung: **12.10.2011**
(21) Anmeldenummer: 11160701.6
(22) Anmeldetag: 31.03.2011
(51) Int. Cl.: B60H 1/00

(54) **Vorrichtung zum Führen einer Luftströmung**

(30) Priorität: 01.04.2010 DE 102010003627
(71) Anmelder: Behr GmbH & Co. KG, 70469 Stuttgart (DE)
(72) Erfinder: Benamira, Salah, 70180, Stuttgart (DE); Lang, Matthias, 70469, Stuttgart (DE)
(74) Vertreter: Grauel, Andreas

(57) **Zusammenfassung**

Die Beschreibung zeigt eine Vorrichtung 601 zum Führen einer Luftströmung, 602, wobei die Vorrichtung 601 derart ausgebildet ist, dass die Vorrichtung 601 eine erste Luftströmung 602 in eine zweite Luftströmung führen kann, wodurch die erste Luftströmung 602 auf die zweite Luftströmung in einem ersten Winkel auftrifft, wobei der erste Winkel einen Wert im Bereich zwischen 30° und 150° aufweist.

## Beschreibung

Die vorliegende Erfindung betrifft eine Vorrichtung zum Führen einer Luftströmung. Ferner betrifft die Erfindung einen Verteilerkasten zum Mischen von mindestens zwei Luftströmungen, eine Klimaanlage zum Einbau in ein Fahrzeug und ein Fahrzeug umfassend eine Klimaanlage.

Im Stand der Technik sind Klimaanlagen für Fahrzeuge, insbesondere Autos, bekannt, die eine Vermischung warmer und kalter Luftströmungen bewirken können.

Klimaanlagen für Fahrzeuge sollten derart konstruiert sein, dass eine Vermischung warmer und kalter Luftströmungen derart erfolgt, dass aus den Luftausströmern eine gemischte Luftströmung in den Fahrgastraum geleitet werden kann. Diese Luftströmung sollte ein weitgehend homogenes Geschwindigkeits- und Temperaturprofil aufweisen. Andernfalls spricht man von einer resultierenden Luftströmung, die eine geschichtete Verteilung aufweist. Aufgrund der stetig kleiner werdenden Baugrößen der Klimaanlagen stellt die Forderung nach einer resultierenden homogenen Luftströmung für den Fahrgastraum, eine immer schwierigere technische Aufgabe dar. Um dennoch zu einer guten Durchmischung zu gelangen, werden z.B. aktive Maßnahmen genutzt. Beispielsweise werden Leitelement bzw. Versperrungskörper in die Klimaanlagen eingebaut, die durch das Erzeugen von Turbulenzen und Wirbeln den Impulsaustausch im Bereich der aufeinandertreffenden Luftströmungen mit unterschiedlichen Temperaturen erhöhen können. Nachteilig bei den Leitelemente und Versperrungskörpern ist allerdings, dass diese einen zusätzlichen Druckverlust und eventuell eine ungewollte Geräuschentwicklung verursachen können.

Eine Aufgabe der Erfindung ist es daher eine Vermischung kalter und warmer Luftströmungen durch eine Klimaanlage für ein Fahrzeug zu ermöglichen, wobei eine gute Durchmischung bei geringen Druckverlusten und geringer Geräuschentwicklung sicher gestellt werden soll.

Als erste Ausführungsform der Erfindung wird eine Vorrichtung zum Führen einer Luftströmung zur Verfügung gestellt, wobei die Vorrichtung derart ausgebildet ist, dass die Vorrichtung eine erste Luftströmung in eine zweite Luftströmung führen kann, wodurch die erste Luftströmung auf die zweite Luftströmung in einem ersten Winkel auftrifft, wobei der erste Winkel einen Wert im Bereich zwischen 30° und 150° aufweist.

Es wird eine Vorrichtung zum Leiten einer Luftströmung zur Verfügung gestellt, wobei die Vorrichtung eine erste Luftströmung mit einer ersten Temperatur auf eine zweite Luftströmung mit einer zweiten Temperatur leitet. Aufgabe ist hierbei eine gute Durchmischung beider Luftströmungen, damit eine Luftströmung erhalten werden kann, deren Temperatur im Wesentlichen homogen zwischen der ersten Temperatur und der zweiten Temperatur liegt, Hierdurch kann ein Fahrgastraum mit einer einstellbaren Temperatur beheizt bzw. gekühlt werden, Erfindungsgemäß treffen die beiden Luftströmungen in einem definierten Winkel aufeinander, wobei dieser Winkel einen Wert zwischen 30° und 150° aufweisen kann. Aufgrund dieses Winkels der beiden Luftströmungen, deutlich von 0° bzw. 180° entfernt, kann eine Durchmischung der beiden Luftströmungen auch auf engem Raum ermöglicht werden.

Als zweite Ausführungsform der Erfindung wird ein Verteilerkasten zum Mischen von mindestens zwei Luftströmungen zur Verfügung gestellt, wobei der Verteilerkasten eine Vorrichtung nach einem der Ansprüche 1 bis 6 umfasst.

Als dritte Ausführungsform der Erfindung wird eine Klimaanlage zum Einbau in ein Fahrzeug zur Verfügung gestellt, wobei die Klimaanlage einen Verteilerkasten nach Anspruch 7 umfasst.

Als vierte Ausführungsform der Erfindung wird ein Fahrzeug zur Verfügung gestellt umfassend eine Klimaanlage nach Anspruch 8.

Beispielhafte Ausführungsformen werden in den abhängigen Ansprüchen beschrieben.

Gemäß einer beispielhaften Ausführungsform der Erfindung wird eine Vorrichtung zur Verfügung gestellt, wobei der erste Winkel einen Wert von ca. 90° aufweist. Das Aufeinandertreffen der mindestens zwei Luftströmungen unter einem Winkel von 90° führt zu einer bestmöglichen Vermischung beider Luftströmungen, da bei diesem Winkel eine große Durchdringung beider Luftströmungen sicher gestellt werden kann.

In einer weiteren erfindungsgemäßen Ausführungsform wird eine Vorrichtung zur Verfügung gestellt, wobei die Vorrichtung in die zweite Luftströmung hineinragt. Das Hineinleiten der ersten Luftströmung in die zweite Luftströmung sowie das Umströmen der ersten Luftströmung durch die zweite Luftströmung führt zu einer guten Durchmischung beider Luftströme, was zu einer homogenen resultierenden Luftströmung führen kann.

Gemäß einem weiteren Ausführungsbeispiel der vorliegenden Erfindung wird eine Vorrichtung zur Verfügung gestellt, wobei die Vorrichtung im Querschnitt Einbuchtungen und/oder Erhebungen aufweist. Das Anordnen von Einbuchtungen bzw. Erhebungen führt zu Turbulenzen und Verwirbelungen und zwar der durch die Vorrichtung geführten ersten Luftströmung als auch der an der Vorrichtung vorbeiströmenden zweiten Luftströmung. Hierdurch wird eine bessere Vermischung der beiden Luftströmungen sicher gestellt. Die Einbuchtungen bzw. Vertiefungen können auch in Strömungsrichtung der ersten Luftströmung an der Vorrichtung angeordnet sein.

Gemäß einer beispielhaften Ausführungsform der Erfindung wird eine Vorrichtung zur Verfügung gestellt, wobei die Vorrichtung im Querschnitt zumindest abschnittsweise eine Zackenform und/oder zumindest abschnittsweise eine Rechteckform und/oder zumindest abschnittsweise eine Wellenform aufweist Durch eine Querschnittsform abweichend von der Kreisform können Wirbel bzw. Turbulenzen erzeugt werden, die eine Verbesserung der Durchmischung der beiden Luftströmungen ermöglichen können.

In einer weiteren erfindungsgemäßen Ausführungsform wird eine Vorrichtung zur Verfügung gestellt, wobei die Vorrichtung derart ausgebildet ist, dass die erste Luftströmung bei Austritt aus der Vorrichtung von der zweiten Luftströmung umströmt werden kann. Eine von der zweiten Luftströmung umströmte erste Luftströmung wird mit der zweiten Luftströmung besser durchmischt, wodurch sich eine homogene resultierende Luftströmung ergeben kann.

Als eine Idee der Erfindung kann angesehen werden, zu mischende Luftströmungen innerhalb des Verteilerkastens möglichst senkrecht aufeinandertreffen zu lassen. Hierdurch wird eine weitgehend homogene Luftströmung am Austritt des Verteilerkastens erzielt.

Eine erfindungsgemäße Vorrichtung zum Führen einer Luftströmung kann auch als Blütenmischer bezeichnet werden, wobei die Luftströmung den Blütenmischer als Freistrahl verlassen kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

Weitere Einzelheiten und Vorteile der Erfindung werden anhand der in den Zeichnungen dargesellten Ausführungsbeispiele deutlich. Es zeigen
Fig. 1 eine Instrumententafel und ein Klimagerät in einer perspektivischen Darstellung,
Fig. 2 ein Klimagerät in einer perspektivischen Darstellung,
Fig. 3 ein Klimagerät in einer Explosionsdarstellung,
Fig. 4 einen Verteilerkasten in einer Schnittdarstellung,
Fig. 5 einen weiteren Verteilerkasten in einer Schnittdarstellung,
Fig. 6 einen weiteren Verteilerkasten in einer Schnittdarstellung,
Fig. 7 eine Vorrichtung zum Führen einer Luftströmung in einer perspektivischen Darstellung.
Fig. 8 einen Querschnitt einer erfindungsgemäßen Vorrichtung zum Führen einer Luftströmung.
Fig. 9 einen Querschnitt einer weiteren erfindungsgemäßen Vorrichtung zum Führen einer Luftströmung,
Fig. 10 einen Querschnitt einer weiteren erfindungsgemäßen Vorrichtung zum Führen einer Luftströmung,
Fig. 11 weitere Vorrichtungen zum Führen einer Luftströmung,
Fig. 12 einen Teil eines Verteilerkastens in einer perspektivischen Ansicht.

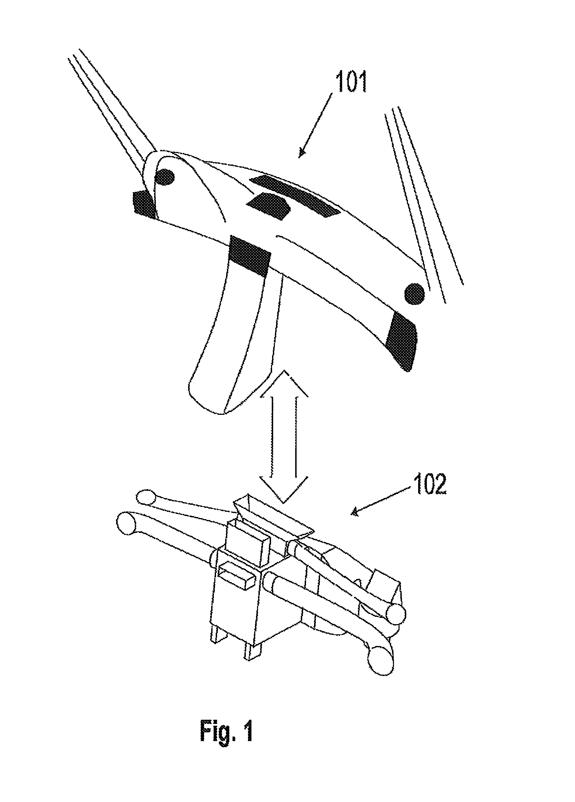

Fig. 1 zeigt eine Instrumententafel 101 und eine Klimaanlage 102, wobei die Klimaanlage 102 innerhalb der Instrumententafel angeordnet werden kann. Die Klimaanlage 102 weist einen Verteilerkasten auf, der für eine Vermischung warmer und kalter Luftströmungen vorgesehen ist, wodurch der Fahrgastraum je nach Bedarf gekühlt bzw. beheizt werden kann.

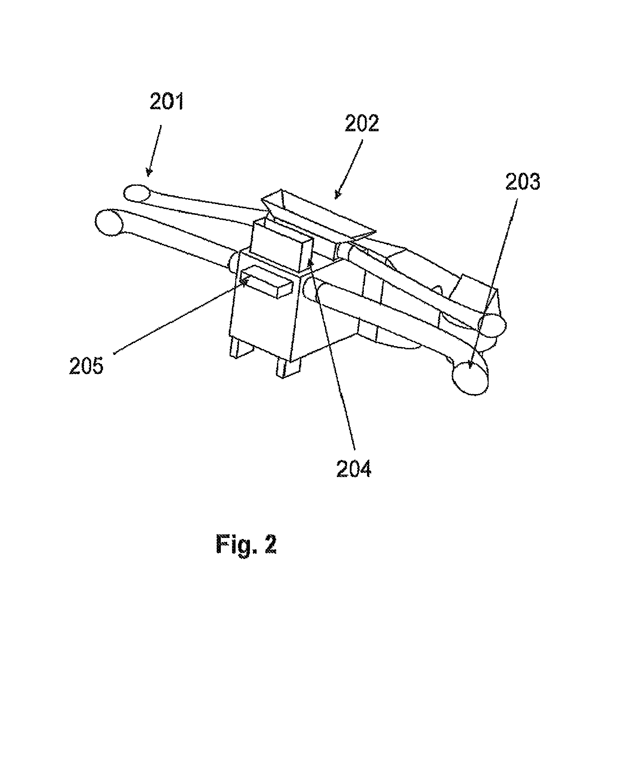

Fig. 2 zeigt eine beispielhafte Klimaanlage, wobei die Klimaanlage umfasst:
einen Seitenscheibendefrost 201, einen Defrost 202, einen Seitendüsenauslaß 203, eine indirekte Belüftung 204 und einen Mitteldüsenauslaß 205.

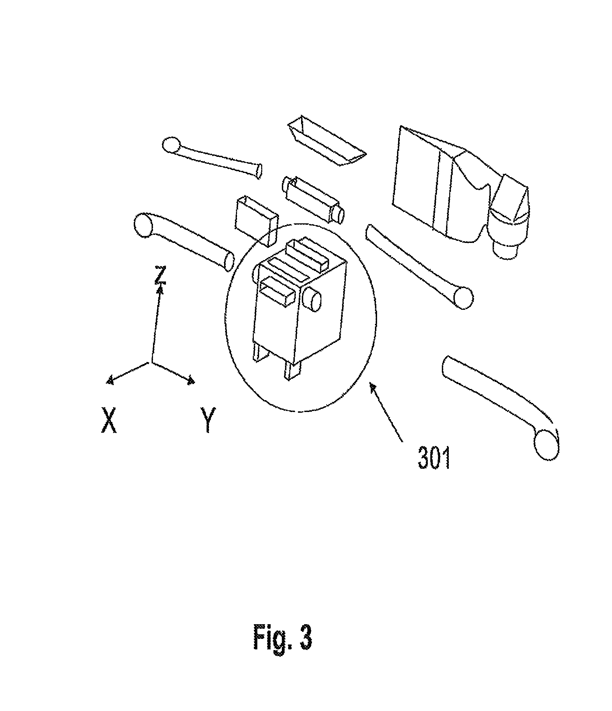

Fig. 3 zeigt die Klimaanlage der Fig. 2 in einer Explosionsdarstellung, wobei auch ein Verteilerkasten 301 dargestellt ist. Der Verteilerkasten 301 hat hierbei auch die Funktion, eine Vermischung warmer und kalter Luftströmungen herbeiführen zu können.

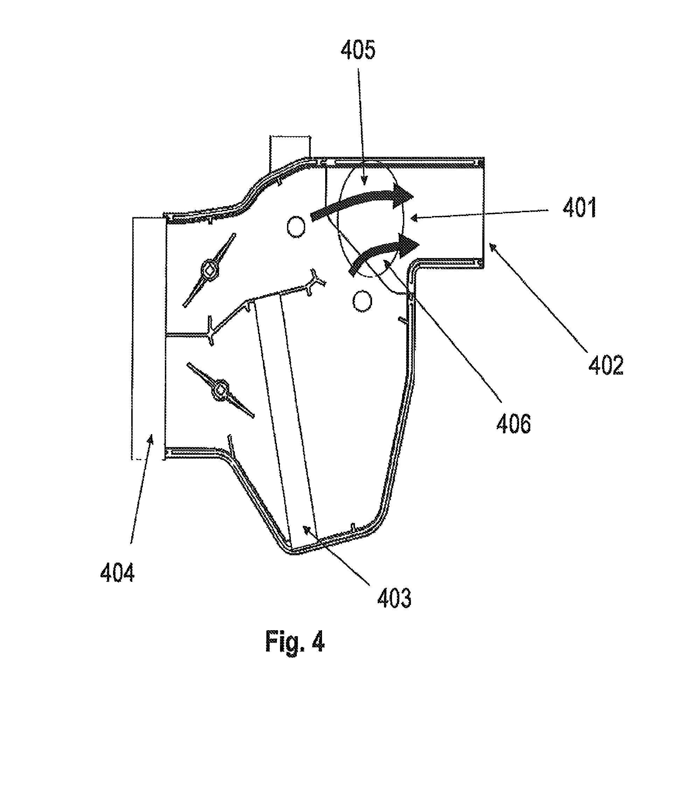

Fig. 4 zeigt einen Verteilerkasten in einer Schnittdarstellung, wobei ein Verdampfer 404, ein Heizkörper 403 und ein Austritt zur Mitteldüse 402 dargesteilt sind. Ferner sind eine kalte Luftströmung 405 und eine warme Luftströmung 406 gezeigt, wobei diese beiden Luftströmungen 405, 406 nur innerhalb des relativ kleinen Bereichs 401 vermischt werden können, Beide Luftströmungen 405, 406 strömen innerhalb des Bereichs 401 nahezu parallel zueinander.

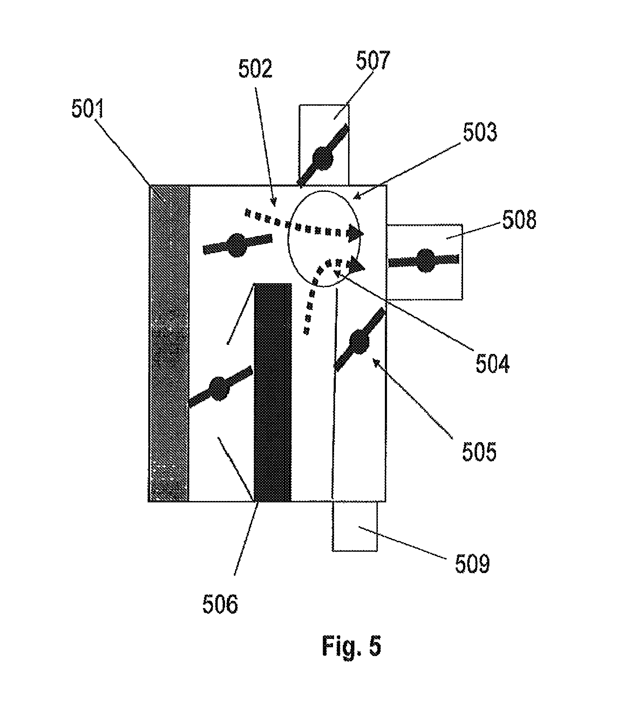

Fig. 5 zeigt ein Klimagerät mit einem Verdampfer 501, einem Defrostauslass 507, einem Belüttungsauslass 508, einen Fußraumauslass 509 und einen Heizkörper 506. Innerhalb des Bereichs 503 kann sich die warme Luftströmung 504 mit der kalten Luftströmung 502 vermischen. Vorteilhafterweise treffen die warme Luftströmung 504 und die kalte Luftströmung 502 in etwa senkrecht aufeinander, wodurch sich eine weitgehend gleichmäßige Durchmischung ergeben kann.

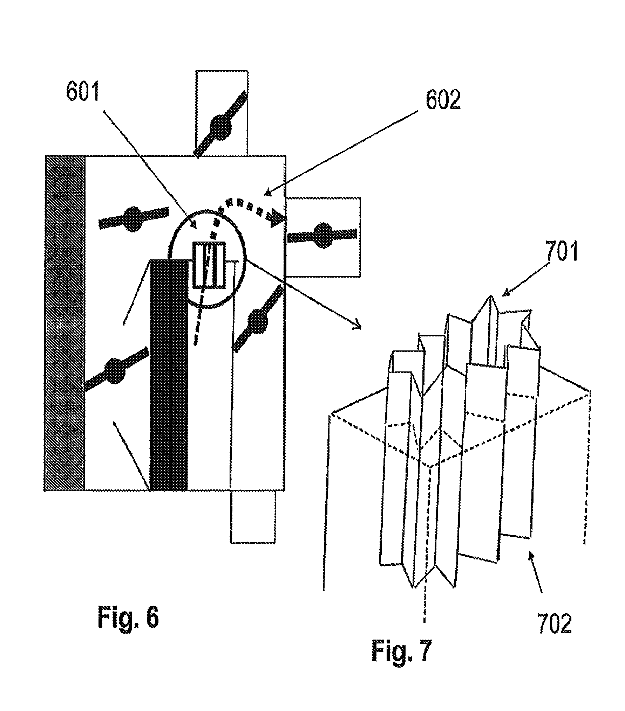

Fig. 6 zeigt einen Verteilerkasten mit einer Vorrichtung 601 zum Führen der warmen Luftströmung 602, wodurch die warme Luftströmung 602 direkt in eine kalte Luftströmung hineingeführt werden kann und ferner sicher gestellt wird, dass die warme Luftströmung 601 in etwa senkrecht auf die kalte Luftströmung trifft. In einer alternativen Ausführungsform kann auch die kalte Luftströmung von einer erfindungsgemäßen Vorrichtung geführt werden.

Fig. 7 zeigt eine Vorrichtung zum Führen einer Luftströmung mit einem oberen Abschnitt 701, der in die kalte Luftströmung hineinragt, und einem unteren Abschnitt 702 zum Leiten der warmen Luftströmung.

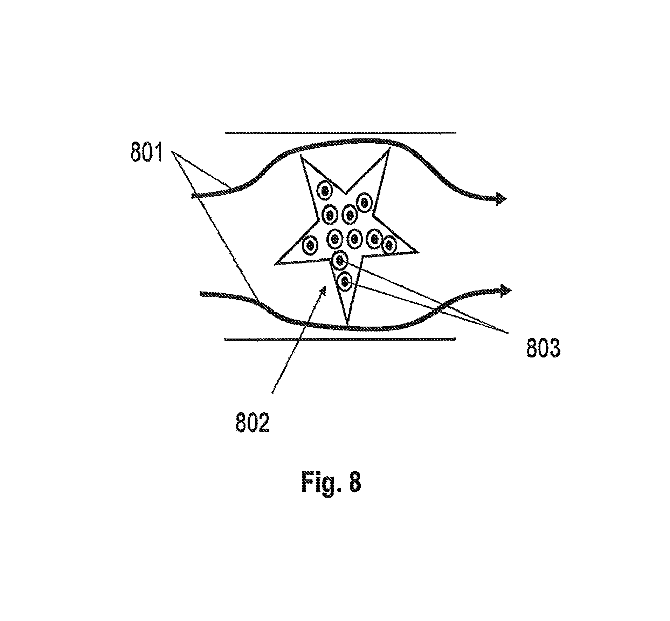

Fig. 8 zeigt im Querschnitt eine erfindungsgemäße Vorrichtung 802 zum Führen einer Luftströmung 803, wodurch die Luftströmung 803 in etwa senkrecht auf eine zweite Luftströmung 801 trifft.

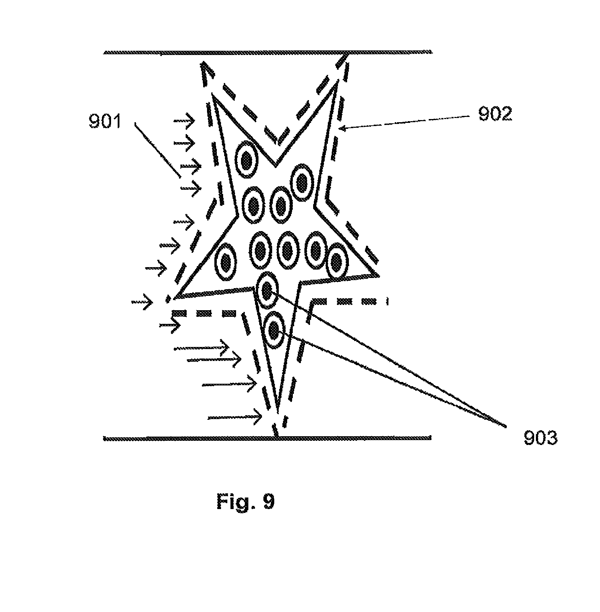

Fig. 9 zeigt im Querschnitt eine erfindungsgemäße Vorrichtung 902 zum Führen einer Luftströmung 903, wobei die Luftströmung 903 in eine Luftströmung 901 hineingeleitet wird, wodurch bei Austritt der Luftströmung 903, diese Luftströmung 903 von der Luftströmung 901 umströmt wird. Das Umströmen kann zu einem besseren Durchmischen der beiden Luftströmungen 901, 903 führen, Die Vorrichtung 902 kann in die Luftströmung 901 hineinragen, wodurch sich die geführte Luftströmung 903 bei Austritt aus der Vorrichtung 902 innerhalb der Luftströmung 901 befinden kann. Die Vorrichtung 902 zum Führen der Luftströmung kann in einer alternativen Ausführungsform derart angeordnet sein, dass die Luftströmungen 901, 903 nicht in etwa senkrecht aufeinander treffen. Erfindungsgemäß können die Luftströmungen 901, 903 mit einem Winkelverhältnis von ca. 30° bis 150° aufeinander treffen, um eine gute Durchmischung bei kleiner Baugröße des Verteilerkastens erzielen zu können.

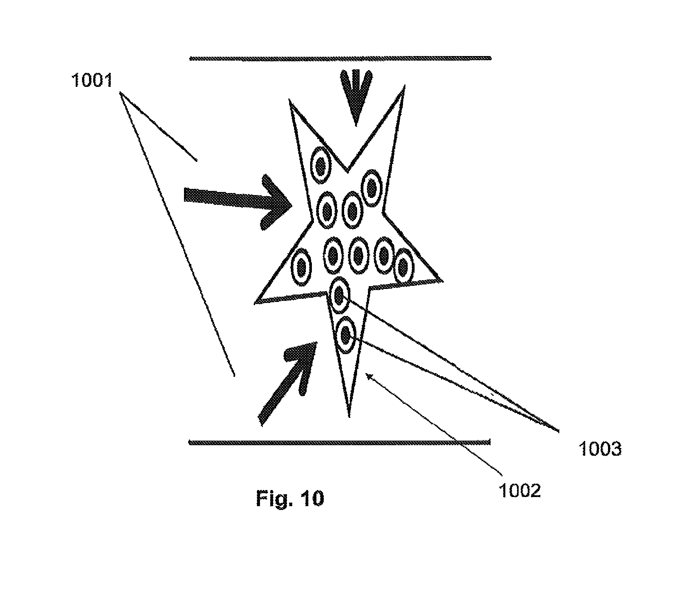

Fig. 10 zeigt einen Querschnitt einer erfindungsgemäßen Vorrichtung 1002 zum Führen einer Luftströmung, wobei die Vorrichtung 1002 eine Luftströmung 1003 in eine umhüllende Luftströmung 1001 hineinleitet, derart, dass die Luftströmung 1003 bei Austritt von der Luftströmung 1001 umströmt werden kann. Aufgrund des Umströmens sowie dem in etwa senkrechten Aufeinandertreffen der beiden Luftströmungen 1001, 1003 ergibt sich eine gute Durchmischung der Luftströmungen 1001, 1003, was zu einer homogenen resultierenden Luftströmung führen kann.

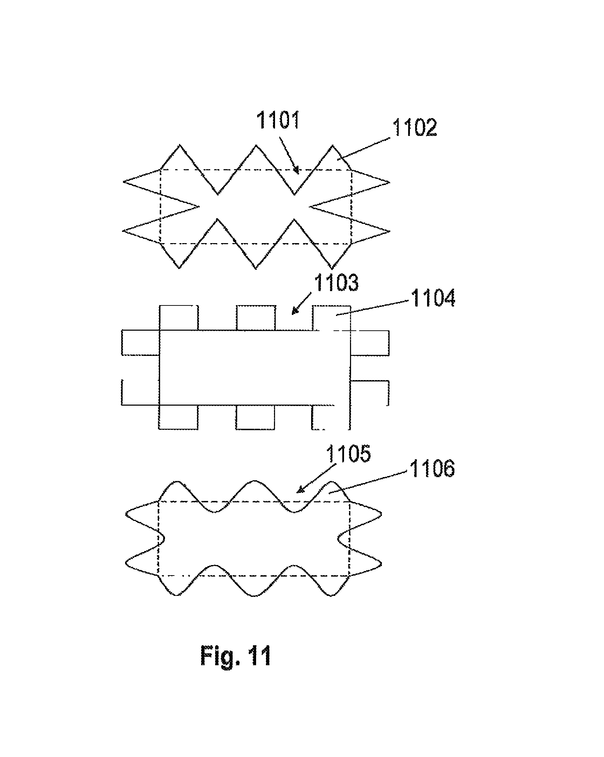

Fig. 11 zeigt verschiedene beispielhafte Querschnittsformen von Vorrichtungen zum Führen von Luftströmungen, wobei die Vorrichtung verschiedene Erhebungen 1102, 1104, 1106 bzw. Vertiefungen/Einbuchtungen 1101, 1103, 1105 aufweisen kann, um eine bessere Durchmischung zu erzielen.

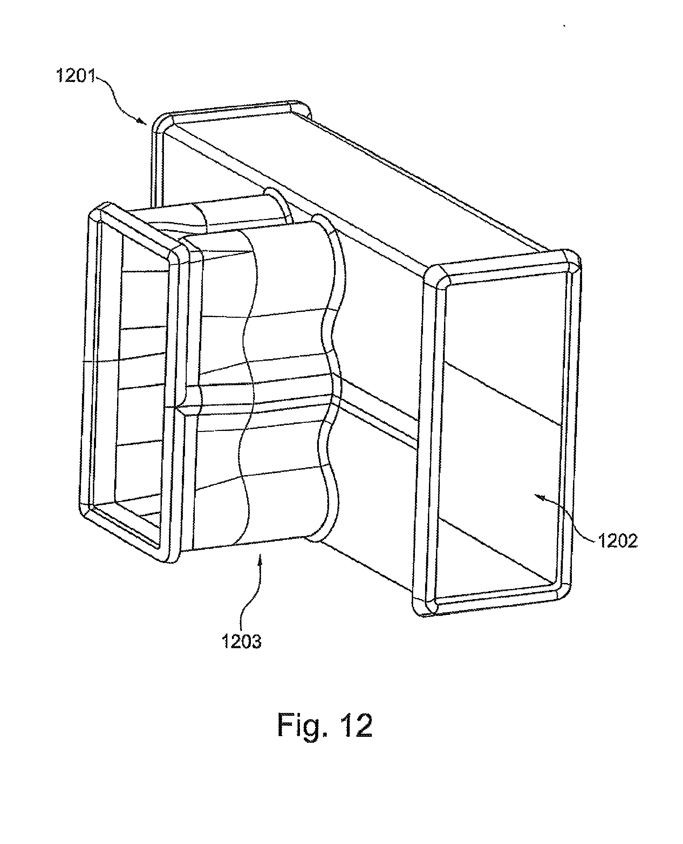

Fig. 12 zeigt eine beispielhafte Ausführungsform eines Teils eines Verteilerkastens mit einer Vorrichtung 1203 zum Führen einer ersten Luftströmung und einem Kanal für eine zweite Luftströmung, wobei die zweite Luftströmung z.B. am Eintritt 1201 eintreten kann und am Auslass 1202 aus dem Verteilerkasten wieder ausströmen kann. Erfindungsgemäß ergibt sich am Auslass 1202 eine homogen durchmischte resultierende Luftströmung.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### Bezugszeichenliste

- 101: Instrumententafel
- 102: Klimaanlage
- 201: Seitenscheibendefrost
- 202: Defrost
- 203: Seitendüsenauslaß
- 204: indirekte Belüftung
- 205: Mitteldüsenauslaß
- 301: Verteilerkasten
- 401: Mischbereich
- 402: Austritt zur Mitteldüse
- 403: Heizkörper
- 404: Verdampfer
- 405: kalte Luftströmung
- 406: warme Luftströmung
- 501: Verdampfer
- 502: kalte Luftströmung
- 503: Mischbereich
- 504: warme Luftströmung
- 505: Klappe
- 506: Heizkörper
- 507: Defrostauslaß
- 508: Belüftungsauslaß
- 509: Fußraumauslaß
- 601: Vorrichtung zum Führen einer Luftströmung
- 602: warme Luftströmung

- 701: oberer Abschnitt
- 702: unterer Abschnitt
- 801: Luftströmung
- 802: Vorrichtung zum Führen einer Luftströmung
- 803: Luftströmung
- 901: Luftströmung
- 902: Vorrichtung zum Führen einer Luftströmung
- 903: Luftströmung
- 1001: Luftströmung
- 1002: Vorrichtung zum Führen einer Luftströmung
- 1003: Luftströmung
- 1101: Einbuchtung
- 1102: Erhebung
- 1103: Einbuchtung
- 1104: Erhebung
- 1105: Einbuchtung
- 1106: Erhebung
- 1201: Eintritt
- 1202: Austritt
- 1203: Vorrichtung zum Führen einer Luftströmung

## Patentansprüche

1. Vorrichtung zum Führen einer Luftströmung, wobei die Vorrichtung (601) derart ausgebildet ist, dass die Vorrichtung (601) eine erste Luftströmung (602) in eine zweite Luftströmung führen kann, wodurch die erste Luftströmung (602) auf die zweite Luftströmung in einem ersten Winkel auftrifft, wobei der erste Winkel einen Wert im Bereich zwischen 30° und 150° aufweist.

2. Vorrichtung nach Anspruch 1, wobei der erste Winkel einen Wert von ca. 90° aufweist.

3. Vorrichtung nach einem der Ansprüche 1 oder 2, wobei die Vorrichtung (601) in die zweite Luftströmung hineinragt.

4. Vorrichtung nach einem der vorhergehenden Ansprüche, wobei die Vorrichtung im Querschnitt Einbuchtungen (1101, 1103, 1105) und/oder Erhebungen (1102, 1104, 1106) aufweist.

5. Vorrichtung nach einem der vorhergehenden Ansprüche, wobei die Vorrichtung im Querschnitt zumindest abschnittsweise eine Zackenform (1101, 1102) und/oder zumindest abschnittsweise eine Rechteckform (1103, 1104) und/oder zumindest abschnittsweise eine Wellenform (1105, 1106) aufweist.

6. Vorrichtung nach einem der vorhergehenden Ansprüche, wobei die Vorrichtung (601) derart ausgebildet ist, dass die erste Luftströmung (602) bei Austritt aus der Vorrichtung (601) von der zweiten Luftströmung umströmt werden kann.

7. Vertellerkasten zum Mischen von mindestens zwei Luftströmungen, wobei der Verteilerkasten eine Vorrichtung nach einem der vorhergehenden Ansprüche umfasst.

8. Klimaanlage zum Einbau in ein Fahrzeug, wobei die Klimaanlage einen Vertellerkasten nach Anspruch 7 umfasst.

9. Fahrzeug umfassend eine Klimaanlage nach Anspruch 8.
